Europäisches Patentamt

European Patent Office

Office européen des brevets

(19)

(11) **EP 0 807 608 B1**

(12) **FASCICULE DE BREVET EUROPEEN**

(45) Date de publication et mention
de la délivrance du brevet:
**12.12.2001 Bulletin 2001/50**

(51) Int Cl.[7]: **C03B 5/235**

(21) Numéro de dépôt: **97400967.2**

(22) Date de dépôt: **29.04.1997**

(54) **Procédé pour la réparation d'un four de verre à l'aide d'un brûleur auxiliaire à combustion d'oxygène**

Verfahren zur Reparatur eines Glasschmelzofens mit Hilfe eines mit Sauerstoff befeuerten Zusatzbrenners

Process for repairing a furnace using an oxygen-fired auxiliary burner

(84) Etats contractants désignés:
**BE DE ES FR IT**

(30) Priorité: **14.05.1996 FR 9606013**

(43) Date de publication de la demande:
**19.11.1997 Bulletin 1997/47**

(73) Titulaire: **L'AIR LIQUIDE, SOCIETE ANONYME POUR L'ETUDE ET L'EXPLOITATION DES PROCEDES GEORGES CLAUDE 75321 Paris Cédex 07 (FR)**

(72) Inventeurs:
• **Ougarane, Lahcen
78180 Montigny-le-Bretonneux (FR)**
• **Legirey, Thierry
78117 Toussus-le-Noble (FR)**

(74) Mandataire: **Vesin, Jacques et al
L'AIR LIQUIDE, S.A.,
Service Propriété Industrielle,
75, Quai d'Orsay
75321 Paris Cédex 07 (FR)**

(56) Documents cités:
**EP-A- 0 447 300           EP-A- 0 508 139
EP-A- 0 546 238           WO-A-90/12760
FR-A- 2 728 254           US-A- 2 800 175
US-A- 5 242 296**

• **CERAMIC ENGINEERING AND SCIENCE PROCEEDINGS, vol. 7, no. 3/4, 1986, US, pages 545-553, XP002025671 R.K. BANSAL ET AL:**

EP 0 807 608 B1

## Description

La présente invention concerne des fours de verre, notamment des fours boucles à récupérateur ou à régénérateurs. Elle concerne plus particulièrement un procédé et un système pour four de verre, notamment un four boucle muni d'un récupérateur permettant de conserver la productivité du four de verre lors d'une défaillance du récupérateur ou du régénérateur et pendant toute la durée de sa réparation.

Un four de verre est habituellement alimenté en énergie par l'intermédiaire, notamment, de brûleurs dits "aéro-combustibles" dans lesquels on injecte un mélange d'air et de combustible tel que gaz naturel, fioul, etc. Ces fours possèdent habituellement au moins un récupérateur ou régénérateur, qui permet de préchauffer l'air avant de l'injecter dans les brûleurs. Lorsque le récupérateur ou régénérateur du four est défaillant ou endommagé, ce four étant normalement chauffé avec des brûleurs à l'air, il n'est plus possible de préchauffer suffisamment l'air injecté dans ces brûleurs et la consommation d'énergie dans les brûleurs augmente. Quelquefois l'énergie apportée par la flamme n'est plus suffisante et on constate des points froids sur ou dans le bain de verre, très préjudiciables à la qualité du verre produit et au rendement du four.

La réparation d'un récupérateur dans un four peut demander plusieurs semaines ou plusieurs mois et il est nécessaire pendant cette période de réparation de continuer la production de verre dans le four. Le problème posé consiste donc à trouver un moyen pour remplacer la fonction du récupérateur tout en utilisant si possible moins d'énergie que lorsque le four est en fonctionnement normal avec son récupérateur.

Les fours de verre peuvent être classés dans différentes catégories selon, en général, le type de verre fabriqué et son utilisation en aval du four de fusion et d'affinage. Les fours de verre pour la fabrication de fibres de verre comportent généralement un ou plusieurs récupérateurs qui récupèrent la chaleur des fumées par échange thermique avec l'air entrant dans le four pour alimenter les brûleurs. Ces fours sont en général des fours dans lesquels le chauffage/fusion de la charge de verre s'effectue grâce à une pluralité de brûleurs disposés dans les parois latérales du four.

Un autre type de four est constitué par les fours dits à régénérateurs et qui comportent au moins deux régénérateurs, fonctionnant alternativement dans le temps :

Les fumées avant leur évacuation à l'atmosphère, traversent ces régénérateurs et cèdent une partie de la chaleur à des parois réfractaires disposées en chicane dans le régénérateur. Toutes les 20 à 30 minutes, on commute en général les brûleurs et les régénérateurs de manière à ce que le régénérateur auparavant traversé par les fumées chaudes des brûleurs soit traversé par l'air frais qui alimente les brûleurs et vice-versa. Cet air extérieur frais est ainsi chauffé au contact des parois du régénérateur.

Il existe essentiellement deux types de fours à régénérateurs : ceux du type à brûleurs transversaux qui comportent des séries de brûleurs dans les parois latérales du four avec, en face de chacun d'eux, un régénérateur, et ceux du type à boucle qui comportent deux régénérateurs adjacents situés dans la partie amont du four (par rapport à l'écoulement de la charge de verre), avec généralement un ou plusieurs injecteurs de combustible situés sous l'ouverture de chaque régénérateur donnant dans le four, de sorte que les fumées des flammes créées par la combustion du combustible et de l'air préchauffé sont récupérées dans l'autre régénérateur et vice-versa lors de la commutation d'un système de brûleurs à l'autre (toutes les 20 à 30 minutes).

La présente invention concerne essentiellement ces derniers fours de type boucle à régénérateurs.

Plus de détails sur les fours de verre peuvent être trouvés par exemple dans l'ouvrage intitulé "Glass Furnaces - Design, Construction and Operation" - Society of Glass Technology - 1987 - de Wolfgang Trier.

De nombreux documents de l'art antérieur décrivent l'utilisation de brûleurs oxycombustibles dans les fours de verre, soit en complément des brûleurs existants, soit en remplacement desdits brûleurs.

Il est connu, par exemple, de la demande européenne EP-A-0.447.300 au nom de la Demanderesse, un procédé de fusion et d'affinage d'un four de verre de type boucle dans lequel on rajoute au moins un brûleur de type oxycombustible dans la zone d'affinage du verre, ledit brûleur étant du type dans lequel on réalise une combustion dite "pulsée" sur le combustible ou le comburant de manière à réduire la production de NOx dans les fumées.

Le brevet US-A-5.116.399 décrit un procédé de fusion de verre dans un four boucle qui comporte un seul brûleur additionnel oxycombustible situé dans la zone d'affinage du verre au milieu de la paroi frontale du four de verre, orienté vers la masse fondue, de manière à maintenir la matière non fondue en-deçà sensiblement de la rangée des bouillonneurs qui séparent la zone de fusion de la zone d'affinage. Dans ce but, les gaz de la flamme issue de ce brûleur additionnel doivent avoir une vitesse au moins égale à 100 m/s, ce qui en fait une flamme dite "à haute impulsion" et présentant notamment pour inconvénient majeur lorsqu'elle est projetée en limite de la masse fondue, de provoquer l'envoi des particules de verre non fondu.

Parmi les documents cités ci-dessus et concernant les fours de verre du type boucle à régénérateurs, aucun n'est relatif au fonctionnement d'un tel four sans régénérateurs, c'est-à-dire qu'aucun ne concerne en particulier le problème du fonctionnement de ce four pendant la réparation des régénérateurs.

De même, le document publicitaire intitulé "Glassman Europe '93-Presented at Glassman Europe '93- Lyon - France - April 28, 1993" par G.B.Tuson, H. Kobayashi et E.J. Lawers est totalement muet sur ce problème.

En particulier, le problème que les inventeurs ont eu à résoudre, après avoir songé à utiliser des flammes dont le comburant comporte plus d'oxygène que l'air et de préférence plus de 50 % vol. d'oxygène, consistait à maintenir sa forme de boucle à la flamme, c'est-à-dire chauffer sensiblement toute la surface du bain de verre : autant cette forme de boucle est relativement facile à réaliser lorsqu'on utilise de l'air, autant cela s'avère difficile lorsque le comburant est de l'oxygène pur ou sensiblement pur (c'est-à-dire ayant de préférence plus de 88 % vol. d'oxygène) et que la vitesse d'injection de l'oxygène ou du gaz comburant reste faible et ne dépasse pas en général 60 m/s (par exemple dans le cas d'oxygène fourni soit à partir d'un réservoir d'oxygène liquide, soit à partir d'un système d'adsorption sous faible pression de type VSA (Vacuum Switch Adsorption) mais que la vitesse du gaz combustible est élevée (c'est-à-dire en particulier lorsque le rapport des vitesses du combustible et du comburant est supérieur à 1). La vitesse du gaz combustible, souvent supérieure à 100 m/s, provoque alors un mélange rapide comburant/ combustible et donc un racourcissement de la flamme qui perd alors sa forme de boucle. (Plus la vitesse du gaz combustible est supérieure à celle du gaz comburant, plus le mélange des deux a tendance à se faire rapidement).

Le procédé selon l'invention pour la réalisation d'une flamme en forme de boucle dans un four de verre de type "boucle" comportant dans sa partie arrière une zone de fusion du verre chauffée au moyen d'au moins un premier brûleur alimenté en combustible et en comburant comportant plus de 50 % vol. d'oxygène, et dans sa partie avant une zone d'affinage du verre, procédé dans lequel on définit un coefficient de stoechiométrie Ks de la flamme dans une zone du four, égal au rapport :

$$Ks = \frac{\text{volume d'oxygène réel injecté dans cette zone}}{\text{volume d'oxygène stoechiométrique}}$$

est caractérisé en ce que l'on règle les injections de gaz comburant et combustible dans au moins le premier brûleur de manière à obtenir une valeur du coefficient Ks dans cette zone au plus égale à 0,8, en ce que l'on injecte un mélange combustible-comburant dans la zone d'affinage de manière à obtenir un coefficient de stoechiométrie Ks dans cette zone dont la valeur est supérieure à sa valeur dans la zone de fusion et compris entre 0,8 et 1,5, et en ce que l'on injecte essentiellement uniquement du gaz comburant dans la zone de fusion située dans le voisinage de la zone d'évacuation des fumées, de manière à obtenir une quantité d'oxygène dans les fumées comprise entre 0,5 et 3 % en volume.

Selon un autre aspect de l'invention, le procédé de transformation temporaire d'un four de verre du type "à boucle" comportant des moyens de récupération de la chaleur des gaz brûlés, au moins un brûleur aéro-combustible placé dans la partie arrière du four et créant une flamme au-dessus du bain de verre ayant la forme d'une boucle s'étendant au-dessus de la zone de fusion du verre et de la zone d'affinage jusqu'à proximité de la paroi avant du four, délimitant la zone d'affinage du verre, puis revenant au-dessus de la zone de fusion vers la partie arrière du four, au moins deux zones d'enfournement du verre non fondu située à proximité de la paroi arrière du four et dans la zone de fusion du verre, est caractérisé en ce que lors de la réfection des moyens de récupération de la chaleur des gaz brûlés, lesdits moyens de récupéation sont fermés de manière à éviter tout passage de fumées, en ce qu'au moins un premier brûleur alimenté en combustible et comburant comportant au moins 50 % volume d'oxygène, est installé à la place d'au moins un brûleur aérocombustible existant, en ce que les fumées sont évacuées par l'intermédiaire de l'une au moins des zones d'enfournement de verre, en ce qu'un moyen d'injection alimenté en combustible et comburant comportant au moins 50 % volume en oxygène, est installé dans la zone d'affinage du verre et en ce qu'au moins un moyen d'injection de gaz comburant comportant au moins 50 % d'oxygène est installé dans la paroi latérale du four située dans la zone de fusion à proximité de la zone d'évacuation des fumées, de manière à créer une flamme ayant une forme de boucle dont la valeur du coefficient de stoechiométrie Ks dans une zone du four :

$$Ks = \frac{\text{volume d'oxygène réel injecté dans cette zone}}{\text{volume d'oxygène stoechiométrique}}$$

est inférieure à 0,8 dans la zone de fusion de verre alimentée par au moins le premier brûleur, est comprise entre 0,8 et 1,5 dans la zone d'affinage du four.

Selon un mode préférentiel de réalisation, l'invention est caractérisée en ce que le gaz comburant est de l'oxygène d'une pureté égale ou supérieure à 88 % volume, injecté à une vitesse comprise entre 10 m/s et 150 m/s.

Selon un autre mode de réalisation, l'invention est caractérisée en ce que le gaz comburant est produit est par un appareil de séparation des gaz de l'air à adsorption du type PSA ou VSA produisant de l'oxygène.

Selon une variante de réalisation, l'invention est caractérisée en ce que le rapport des vitesses d'injection des gaz combustible et gaz comburant lors de leur injection dans le four est supérieur ou égal à 1.

Selon un autre mode de réalisation, l'invention est caractérisée en ce que le rapport de stoechiométrie Ks dans la zone d'affinage du four est compris entre environ 0,5 et 0,8.

Selon un mode préférentiel de réalisation, l'invention est caractérisée en ce que le rapport de stoechiométrie Ks dans la zone d'affinage du four est de l'ordre d'environ 1,3.

De préférence, la quantité d'oxygène dans les fumées après injection de gaz comburant est égale à environ 1,5 % en volume.

De préférence également, le rapport Ks dans la zone de fusion est d'environ 0,65.

De façon préférentielle, la quantité d'oxygène en volume injectée dans la zone de fusion du verre, à l'exception de la zone d'évacuation des fumées est d'environ 40 % la quantité totale d'oxygène en volume injectée dans le four.

De préférence, la quantité d'oxygène en volume injectée dans la zone d'affinage du verre est d'environ 50 % la quantité totale d'oxygène en volume injectée dans le four.

Selon un autre mode de réalisation de l'invention, la quantité d'oxygène en volume injectée dans la zone d'évacuation des fumées est d'environ 10 % la quantité totale d'oxygène en volume injectée dans le four.

Il est également possible que, selon l'invention, un combustible, généralement sous forme gazeuse, soit envoyé dans le four avec le verre non fondu et la quantité de gaz comburant injectée dans le four est ajustée de manière à maintenir sensiblement les rapports stoechiométriques.

Le coefficient de stoechiométrie Ks d'une flamme dans une zone du four est défini comme suit :

$$Ks = \frac{\text{volume d'oxygène réel injecté dans cette zone}}{\text{volume d'oxygène stoechiométrique}}$$

Le volume d'oxygène réel est le volume d'oxygène réellement ajouté dans la zone considérée (fusion, affinage) par l'intermédiaire d'un brûleur et/ou d'une ou plusieurs lances.

Le volume d'oxygène stoechiométrique est défini comme étant le volume d'oxygène nécessaire à la combustion complète du combustible injecté dans la zone considérée par l'intermédiaire d'un ou plusieurs brûleurs ou provenant de la zone précédant la zone considérée. Tous ces volumes sont bien entendu définis dans des conditions similaires, de préférence des conditions normales de température et de pression (20°C -1 atmosphère).

Le rapport de combustion stoechiométrique pour le gaz naturel est d'environ de 2 m$^3$ d'oxygène par m$^3$ de gaz naturel. Pour le fioul lourd, ce rapport est d'environ de 2,4 m$^3$ d'oxygène par m$^3$ de fioul lourd. D'une façon générale pour un combustible de 10 kWh de PCI (pouvoir combustible inférieur), il faut sensiblement 2 m$^3$ d'oxygène.

L'invention sera mieux comprise à l'aide des exemples de réalisation suivants, donnés à titre non limitatif, conjointement avec les figures, qui représentent :

- la figure 1, un schéma conventionnel d'un four à boucle à récupérateur pour produire du verre, selon l'art antérieur,
- la figure 2 représente un mode de fonctionnement du four de la figure 1 en l'absence de récupérateur, dans lequel la combustion du four est une combustion entièrement à l'oxygène, selon l'invention.

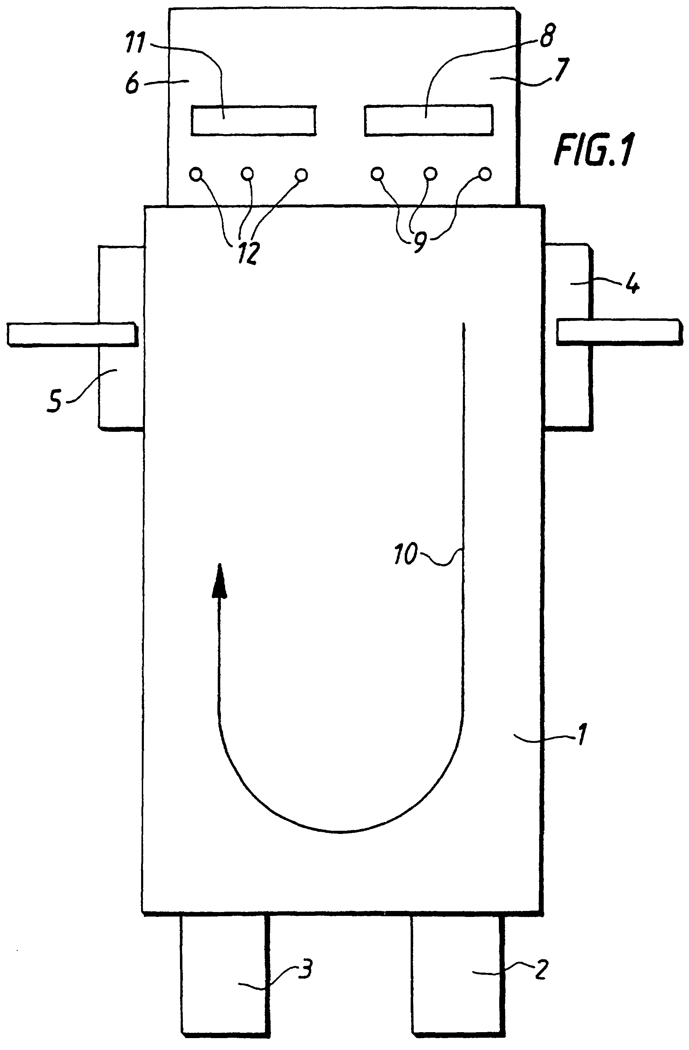

Sur la figure 1, est représentée une vue schématique de dessus d'un four de verre de type "boucle" 1 de forme sensiblement rectangulaire, comportant deux zones d'enfournement latéral 4 et 5 du verre, dans la partie arrière du four, le verre fondu s'écoulant dans le sens de la flèche 10 vers les canaux 2 et 3 eux-mêmes reliés à des alimentations (ou feeders) des machines de formage du verre.

Dans la paroi arrière du four sont en général disposés deux ensembles 6 et 7, généralement identiques comportant chacun une ouverture 8, 11, en communication avec les régénérateurs (non représentés sur la figure) et une série d'injecteurs de combustible 9, en général du gaz naturel ou éventuellement du fioul pulvérisé.

De l'air préchauffé dans le régénérateur adjacent est injecté dans l'ouverture 8 (ou "port") et brûle avec le combustible injecté à travers les injecteurs 9, formant une flamme en forme de U schématisée par la flèche 10, dont les fumées s'échappent par l'ouverture 11 et chauffent le régénérateur adjacent. Toutes les 20 à 30 minutes, on provoque une inversion du système en utilisant de l'air préchauffé dans le régénérateur adjacent à l'ouverture 11 et du combustible injecté dans les injecteurs 12 formant une flamme en U dont les fumées sont évacuées par l'ouverture 8 et réchauffe le régénérateur adjacent à cette ouverture 8.

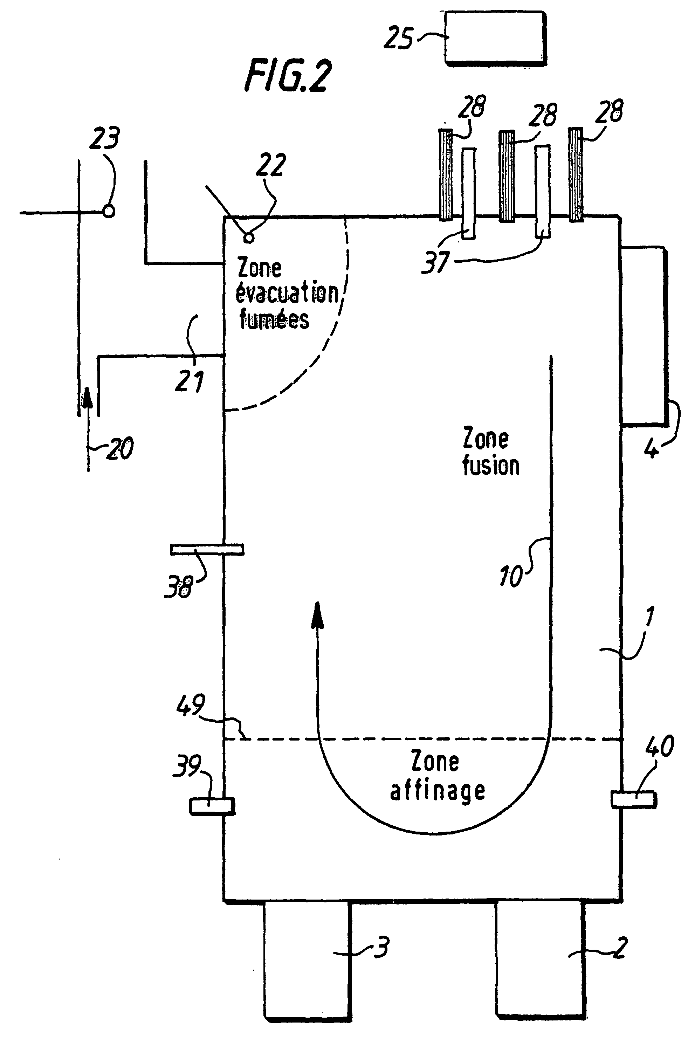

La figure 2 représente un exemple de réalisation de l'invention. Sur la figure 2, les mêmes éléments que ceux de la figure 1 portent les mêmes références.

Entre les trois injecteurs de combustible 28 sont placées deux lances à oxygène 37. Pour compléter la combustion, deux brûleurs oxycombustibles 39 et 40 sont placés dans la zone d'affinage du verre, au-delà des bouillonneurs 49. Enfin une lance à oxygène 38 est prévue avant et à proximité de l'évacuation des fumées 21.

Exemple 1 :

Dans cette configuration des lances à oxygène 37 et des brûleurs oxycombustibles 39 et 40 d'une puissance nominale de 500 kW chacun ont été utilisés de manière à réaliser cette conversion du four sans son récupérateur. Une évacuation des fumées a été installée à la place d'une des ouvertures d'enfournement du verre pour permettre d'isoler le ou les récupérateurs en vue de réparations.

Cette méthode a permis de maintenir le four en production pendant la réparation des récupérateurs.

Des lances à oxygène 37 au nombre de deux sont installées au dessous de l'ouverture 25. Elles sont entourées par trois injecteurs de gaz naturel 28. Les lances à oxygène 37 et les injecteurs de gaz naturel 28 sont situés dans des plans différents. Le plan des injecteurs de gaz naturel est situé au-dessus de celui des lances à oxygène de manière à former une atmosphère oxydante, dans le cas présent.

Si le verre, au contraire, doit être fondu sous atmosphère réductrice, on placera les injecteurs de gaz au-dessous des injecteurs d'oxygène. Mais il est préférable, dans tous les cas, d'avoir des vitesses d'injection de comburant et de combustible qui ne soient pas trop différentes, afin d'éviter un mélange rapide (turbulences) et obtenir au contraire une combustion étagée. Cependant le rapport des vitesses du comburant et du combustible sera de préférence supérieur à 1, plus préférentiellement compris entre 1 et 2.

L'oxygène est introduit dans le four en régime subsonique selon un angle compris entre -15° et +°15° environ. Il est bien entendu qu'il est également possible d'installer des lances ou des injecteurs dans le même plan.

Une troisième lance à oxygène 38 est installée à proximité de l'orifice 21 de sortie des fumées du four de manière à compléter la combustion et d'éviter de brûler le monoxyde de carbone dans la cheminée d'évacuation des gaz. Le gaz naturel est introduit avec une vitesse de préférence comprise entre 10 et 150 m/s. L'injection d'oxygène se fait de préférence en régime subsonique afin d'éviter d'une part une surchauffe à la racine de la flamme, et d'autre part le développement de points chauds sur le mur du four situé en face de cette flamme, point chaud qui serait dû alors à une impulsion trop grande de la flamme.

Dans la zone d'affinage du verre sont installés de préférence deux brûleurs positionnés sensiblement horizontalement et légèrement orientés vers la zone d'enfournement. (Par "légèrement", on entend un angle compris entre environ 0° et 10°).

Le réglage de la combustion s'effectue de la manière indiquée dans le tableau 1, c'est-à-dire qu'environ 60 % de la puissance calorifique est concentré dans la zone de fusion (qui s'étend jusqu'aux bouillonneurs 49) avec 40 % en volume de l'oxygène total injecté dans cette zone de fusion, avec un coefficient Ks de l'ordre de 0,65 (compris entre 0,5 et 0,8), 40 % de la puissance calorifique concentrée dans la zone d'affinage avec un coefficient Ks = 1,3 (compris entre 0,8 et 1,5) et 50 % vol. de l'oxygène total (ou comburant total) injecté dans cette zone d'affinage et aucune puissance concentrée sur la zone d'évacuation des fumées, mais avec environ 10 % en volume de l'oxygène total distribué dans le four, injecté via la lance 38, à proximité de l'ouverture d'évacuation des fumées afin d'éliminer les gaz combustibles et polluants avant évacuation des fumées. (Plus généralement selon le ratio complémentaire d'oxygène tel que défini ci-dessus).

La flamme développée en tête du four couvre plus des deux tiers de la surface du bain de verre. Elle est longue et lumineuse grâce à une combustion incomplète résultant d'un craquage du gaz naturel dans la flamme dans la partie initiale de la combustion, suivi par un rebrûlage des particules de carbone ainsi générées. L'énergie et l'oxygène amenés par les deux brûleurs situés dans la zone d'affinage permettent d'apporter le complément d'énergie nécessaire à la combustion et de maintenir la forme de boucle de la flamme résultante au-dessus du bain. De cette manière, une couverture maximum de la surface du bain est réalisée.

La distribution de l'énergie et des rapports de stoechiométrie Ks dans le four sont résumés dans le tableau 1 ci-après.

Tableau 1 :

| Position (zone) | Somme des puissances | Oxygène (volume) | Ratio Ks |
|---|---|---|---|
| Zone de fusion | 60 % | 40 % | 0,65 (entre 0,5 et 0,8) |
| Zone d'affinage | 40 % | 50 % | 1,3 (entre 0,8 et 1,5) |
| Zone d'évacuation des fumées | 0 % | 10 % (*) | |

* Pourcentage d'oxygène complémentaire au pourcentage du four (fusion et affinage) pour avoir un pourcentage d'oxygène en volume dans les fumées compris entre 0,5 % et 3 % vol. et de préférence 1,5 % vol. Dans le cas où il y a une autre source de combustible dans le four -autre que le combustible délivré aux brûleurs- il faut alors rajouter de l'oxygène par rapport aux pourcentrages indiqués ci-dessus, de manière à obtenir de 0,5 à 3 % vol. d'oxygène dans les fumées qui quittent le four.

La combustion dans le four est dissymétrique, c'est-à-dire que le coefficient Ks évolue le long de la flamme. Cette combustion est de préférence "étagée" de manière à rallonger la flamme pour une couverture maximum de la surface du bain en fusion.

Grâce aux résultats obtenus, on a constaté que la consommation spécifique du four a baissé de 17 % environ malgré une tirée du four plus faible tandis que la qualité de verre réalisée est substantiellement identique à celle réalisée avant modification du four.

**Revendications**

1.  Procédé pour la réalisation d'une flamme en forme de boucle dans un four de verre comportant dans sa partie arrière une zone de fusion du verre chauffée au moyen d'au moins un premier brûleur alimenté en combustible et en comburant comportant plus de 50 % vol. d'oxygène, et dans sa partie avant une zone d'affinage du verre, procédé dans lequel on définit un coefficient de stoechiométrie Ks de la flamme dans une zone du four, égal au rapport :

$$Ks = \frac{\text{volume d'oxygène réel injecté dans cette zone}}{\text{volume d'oxygène stoechiométrique}}$$

    **caractérisé en ce que** l'on règle les injections de gaz comburant et combustible dans au moins le premier brûleur de manière à obtenir une valeur du coefficient Ks dans la zone de fusion au plus égale à 0,8, **en ce que** l'on injecte un mélange combustible-comburant dans la zone d'affinage de manière à obtenir un coefficient de stoechiométrie Ks dans cette zone dont la valeur est supérieure à sa valeur dans la zone de fusion et compris entre 0,8 et 1,5, et **en ce que** l'on injecte uniquement du gaz comburant dans la zone de fusion située dans le voisinage de la zone d'évacuation des fumées, de manière à obtenir une quantité d'oxygène dans les fumées comprise entre 0,5 et 3 % en volume.

2.  Procédé de transformation temporaire d'un four de verre du type "à boucle" comportant des moyens de récupération de la chaleur des gaz brûlés, au moins un brûleur aéro-combustible placé dans la partie arrière du four et créant une flamme au-dessus du bain de verre ayant la forme d'une boucle s'étendant au-dessus de la zone de fusion du verre et de la zone d'affinage jusqu'à proximité de la paroi avant du four, délimitant la zone d'affinage du verre, puis revenant au-dessus de la zone de fusion vers la partie arrière du four, au moins deux zones d'enfournement du verre non fondu située à proximité de la paroi arrière du four et dans la zone de fusion du verre, **caractérisé en ce que** lors de la réfection des moyens de récupération de la chaleur des gaz brûlés, lesdits moyens de récupéation sont fermés de manière à éviter tout passage de fumées, **en ce qu'**au moins un premier brûleur alimenté en combustible et comburant comportant au moins 50 % volume d'oxygène, est installé à la place d'au moins un brûleur aérocombustible existant, **en ce que** les fumées sont évacuées par l'intermédiaire de l'une au moins des zones d'enfournement de verre, **en ce qu'**un moyen d'injection alimenté en combustible et comburant comportant au moins 50 % volume en oxygène, est installé dans la zone d'affinage du verre et **en ce qu'**au moins un moyen d'injection de gaz comburant comportant au moins 50 % d'oxygène est installé dans la paroi latérale du four située dans la zone de fusion à proximité de la zone d'évacuation des fumées, de manière à créer une flamme ayant une forme de boucle dont la valeur du coefficient de stoechiométrie Ks dans une zone du four :

$$Ks = \frac{\text{volume d'oxygène réel injecté dans cette zone}}{\text{volume d'oxygène stoechiométrique}}$$

    est inférieur à 0,8 dans la zone de fusion de verre alimentée par au moins le premier brûleur et est comprise entre 0,8 et 1,5 dans la zone d'affinage du four.

3.  Procédé de transformation temporaire d'un four de verre du type "à boucle" selon la revendication 2, **caractérisé en ce que** le gaz comburant est de l'oxygène d'une pureté égale ou supérieure à 88 % volume, injecté à une vitesse comprise entre 10 et 150 m/s.

4.  Procédé de transformation temporaire d'un four de verre du type "à boucle" selon la revendication 2 ou 3, **caractérisé en ce que** le gaz comburant est produit par un appareil de séparation des gaz de l'air à adsorption du type PSA ou VSA produisant de l'oxygène.

5.  Procédé selon l'une des revendications 1 à 4, **caractérisé en ce que** le rapport des vitesses d'injection gaz combustible/gaz comburant lors de leur injection dans le four est supérieure ou égale à 1.

6.  Procédé selon l'une des revendications 1 à 5, **caractérisé en ce que** le rapport de stoechiométrie Ks dans la zone d'affinage du four est compris entre environ 0,5 et 0,8.

7. Procédé selon l'une des revendications 1 à 6, **caractérisé en ce que** le rapport de stoechiométrie Ks dans la zone d'affinage du four est de l'ordre d'environ 1,3.

8. Procédé selon l'une des revendications 1 à 7, **caractérisé en ce que** la quantité d'oxygène dans les fumées après injection de gaz comburant est égale à environ 1,5 % en volume.

9. Procédé selon l'une des revendications 1 à 8, **caractérisé en ce que** le rapport Ks dans la zone de fusion est d'environ 0,65.

10. Procédé selon l'une des revendications 1 à 9, **caractérisé en ce que** la quantité d'oxygène en volume injectée dans la zone de fusion du verre, à l'exception de la zone d'évacuation des fumées est d'environ 40 % la quantité totale d'oxygène en volume injectée dans le four.

11. Procédé selon l'une des revendications 1 à 10, **caractérisé en ce que** la quantité d'oxygène en volume injectée dans la zone d'affinage du verre est d'environ 50 % la quantité totale d'oxygène en volume injecté dans le four.

12. Procédé selon l'une des revendications 1 à 11, **caractérisé en ce que** la quantité d'oxygène en volume injectée dans la zone d'évacuation des fumées est d'environ 10 % la quantité totale d'oxygène en volume injecté dans le four.

13. Procédé selon l'une des revendications 1 à 12, **caractérisé en ce qu'**un combustible, généralement sous forme gazeuse, est envoyé dans le four avec le verre non fondu et la quantité de gaz comburant injectée dans le four est ajustée de manière à maintenir sensiblement les rapports stoechiométriques.

**Claims**

1. Process for the production of a loop-shaped flame in a glass furnace comprising in its rear part a glass melting zone heated by means of at least one first port fed with fuel and with oxidizer comprising more than 50 vol% of oxygen and, in its front part, a glass refining zone, in which process a stoichiometry coefficient Ks of the flame in a zone of the furnace is defined, equal to the ratio:

$$Ks = \frac{\text{real oxygen volume injected into this zone}}{\text{Stoichiometric oxygen volume}}$$

**characterized in that** the injections of oxidizer and fuel gas are adjusted in at least the first port so as to obtain a value of the coefficient Ks in the melting zone equal to at most 0.8, **in that** a fuel-oxidizer mixture is injected into the refining zone so as to obtain a stoichiometry coefficient Ks in this zone the value of which is higher than its value in the melting zone and is between 0.8 and 1.5, and **in that** only oxidizer gas is injected into the melting zone situated in the vicinity of the fume discharge zone, so as to obtain a quantity of oxygen in the fumes of between 0.5 and 3 % by volume.

2. Process for temporary conversion of a glass furnace of the "end-fired" type comprising means for recovery of the heat of the burnt gases, at least one air-fuel port placed in the rear part of the furnace and creating a flame above the bath of glass which has the shape of a loop extending above the glass melting zone and the refining zone as far as proximity to the front wall of the furnace, bounding the glass refining zone, then returning above the melting zone towards the rear part of the furnace, at least two zones for charging unmelted glass, situated in proximity to the rear wall of the furnace and in the glass melting zone, **characterized in that** during the repair to the means of recovery of the heat of the burnt gases the said means of recovery are closed so as to avoid any flow of fumes, **in that** at least one first port fed with fuel and oxidizer comprising at least 50 volume % of oxygen is installed in the place of at least one existing air-fuel port, **in that** the fumes are discharged through the intermediacy of at least one of the zones for charging glass, **in that** a means of injection fed with fuel and oxidizer comprising at least 50 volume % as oxygen is installed in the glass refining zone and **in that** at least one means of injecting oxidizer gas comprising at least 50 % of oxygen is installed in the side wall of the furnace situated in the melting zone in proximity to the fume discharge zone, so as to create a flame which is loop-shaped, in which the value of the stoichiometry coefficient Ks in a zone of the furnace:

$$Ks = \frac{\text{real oxygen volume injected into this zone}}{\text{Stoichiometric oxygen volume}}$$

is lower than 0.8 in the glass melting zone fed by at least the first port and is between 0.8 and 1.5 in the refining zone of the furnace.

3. Process for temporary conversion of a glass furnace of the "end-fired" type according to Claim 2, **characterized in that** the oxidizer gas is oxygen of a purity equal to or higher than 88 volume %, injected at a speed of between 10 and 150 m/s.

4. Process for temporary conversion of a glass furnace of the "end-fired" type according to Claim 2 or 3, **characterized in that** the oxidizer gas is produced by an apparatus for separating the gases of air with adsorption of the PSA or VSA type, producing oxygen.

5. Process according to one of Claims 1 to 4, **characterized in that** the ratio of the fuel gas/oxidizer gas injection speeds during their injection into the furnace is higher than or equal to 1.

6. Process according to one of Claims 1 to 5, **characterized in that** the stoichiometry ratio Ks in the refining zone of the furnace is between approximately 0.5 and 0.8.

7. Process according to one of Claims 1 to 6, **characterized in that** the stoichiometry ratio Ks in the refining zone of the furnace is of the order of approximately 1.3.

8. Process according to one of Claims 1 to 7, **characterized in that** the quantity of oxygen in the fumes after injection of oxidizer gas is equal to approximately 1.5 % by volume.

9. Process according to one of Claims 1 to 8, **characterized in that** the ratio Ks in the melting zone is approximately 0.65.

10. Process according to one of Claims 1 to 9, **characterized in that** the quantity of oxygen by volume injected into the glass melting zone, with the exception of the fume discharge zone, is approximately 40 % of the total quantity of oxygen by volume injected into the furnace.

11. Process according to one of Claims 1 to 10, **characterized in that** the quantity of oxygen by volume injected into the glass refining zone is approximately 50 % of the total quantity of oxygen by volume injected into the furnace.

12. Process according to one of Claims 1 to 11, **characterized in that** the quantity of oxygen by volume injected into the fume discharge zone is approximately 10 % of the total quantity of oxygen by volume injected into the furnace.

13. Process according to one of Claims 1 to 12, **characterized in that** a fuel, generally in gaseous form, is sent into the furnace with the unmelted glass and the quantity of oxidizer gas injected into the furnace is adjusted so as to maintain substantially the stoichiometric ratios.

**Patentansprüche**

1. Verfahren zur Erzeugung einer schleifenförmigen Flamme in einem Glasofen, der in seinem hinteren Teil eine Glasschmelzzone, die mit mindestens einem ersten, mit Brennstoff und Oxidationsmittel mit einem Sauerstoffgehalt von mehr als 50 Vol.-% gespeisten Brenner erhitzt wird, und in seinem vorderen Teil eine Glasläuterungszone aufweist, bei dem man einen Stöchiometrie-Koeffizienten Ks der Flamme in einer Ofenzone definiert, der gleich dem Verhältnis:

Ks = in diese Zone eingeleitetes reales Sauerstoffvolumen/stöchiometrisches Sauerstoffvolumen

ist, **dadurch gekennzeichnet, daß** man die Einleitungen von Oxidationsgas und Brenngas in zumindest dem ersten Brenner so reguliert, daß sich in der Schmelzzone für den Koeffizienten Ks ein Wert von höchstens 0,8 ergibt, in die Läuterungszone ein Brennstoff-Oxidationsmittel-Gemisch so einleitet, daß sich in dieser Zone ein Stöchiometrie-Koeffizient Ks ergibt, der über dem Wert in der Schmelzzone und zwischen 0,8 und 1,5 liegt, und das Oxidationsgas lediglich in die in der Nähe der Rauchabzugszone so einleitet, daß sich im Rauch eine Sauerstoffmenge zwischen 0,5 und 3 Vol.-% ergibt.

2. Verfahren zum zeitweiligen Umbau eines Glasofens vom Stirnbrennertyp mit Einrichtungen zur Rückgewinnung der Verbrennungsgaswärme, mindestens einem im hinteren Teil des Ofens angeordneten Luft-Brennstoff-Brenner, der über dem Glasbad eine schleifenförmige, Flamme erzeugt, die sich über der Glasschmelzzone und der Läuterungszone bis in die Nähe der die Glasläuterungszone begrenzenden Vorderwand des Ofens erstreckt und dann über der Schmelzzone in den hinteren Teil des Ofens zurückkehrt, und mindestens zwei Zonen zum Eintragen von ungeschmolzenem Glas, die sich in der Nähe der Hinterwand des Ofens und in der Glasschmelzzone befinden, **dadurch gekennzeichnet, daß** man während der Reparatur der Einrichtungen zur Rückgewinnung der Verbrennungsgaswärme die Rückgewinnungseinrichtungen rauchdicht verschließt, anstelle des mindestens einen bestehenden Luft-Brennstoff-Brenners zumindest einen ersten, mit Brennstoff und Oxidationsmittel mit einem Sauerstoffgehalt von mindestens 50 Vol.-% gespeisten Brenner installiert, den Rauch über mindestens eine der Zonen zum Eintragen von Glas abzieht, in der Glasläuterungszone eine mit Brennstoff und Oxidationsmittel mit einem Sauerstoffgehalt von mindestens 50 Vol.-% gespeiste Einleitungseinrichtung installiert und in der in der Schmelzzone liegenden Seitenwand des Ofens in der Nähe der Rauchabzugszone mindestens eine mit Brennstoff und Oxidationsmittel mit einem Sauerstoffgehalt von mindestens 50 Vol.-% gespeiste Einleitungseinrichtung installiert, so daß eine schleifenförmige Flamme erzeugt wird, deren Stöchiometrie-Koeffizient Ks in einer Zone des Ofens:

$$Ks = \text{in diese Zone eingeleitetes reales Sauerstoffvolumen/stöchiometrisches Sauerstoffvolumen}$$

in der von mindestens dem ersten Brenner gespeisten Glasschmelzzone des Ofens unter 0,8 und in der Läuterungszone des Ofens zwischen 0,8 und 1,5 liegt.

3. Verfahren zum zeitweiligen Umbau eines Glasofens vom Stirnbrennertyp nach Anspruch 2, **dadurch gekennzeichnet, daß** man als Oxidationsgas Sauerstoff mit einer Reinheit größer gleich 88 Vol.-% mit einer Geschwindigkeit zwischen 10 und 150 m/s einleitet.

4. Verfahren zum zeitweiligen Umbau eines Glasofens vom Stirnbrennertyp nach Anspruch 2 oder 3, **dadurch gekennzeichnet, daß** man das Oxidationsgas mit Hilfe einer Sauerstoff produzierenden Vorrichtung zur adsorptiven Luftgaszerlegung vom PSA- oder VSA-Typ produziert.

5. Verfahren nach einem der Ansprüche 1 bis 4, **dadurch gekennzeichnet, daß** das Verhältnis der Einleitungsgeschwindigkeiten von Brenngas und Oxidationsgas bei ihrer Einleitung in den Ofen größer gleich 1 ist.

6. Verfahren nach einem der Ansprüche 1 bis 5, **dadurch gekennzeichnet, daß** das Stöchiometrieverhältnis Ks in der Läuterungszone des Ofens zwischen etwa 0,5 und 0,8 liegt.

7. Verfahren nach einem der Ansprüche 1 bis 6, **dadurch gekennzeichnet, daß** das Stöchiometrieverhältnis Ks in der Läuterungszone des Ofens etwa 1,3 beträgt.

8. Verfahren nach einem der Ansprüche 1 bis 7, **dadurch gekennzeichnet, daß** die Sauerstoffmenge im Rauch nach Einleitung des Oxidationsgases etwa 1,5 Vol.-% beträgt.

9. Verfahren nach einem der Ansprüche 1 bis 8, **dadurch gekennzeichnet, daß** das Verhältnis Ks in der Schmelzzone etwa 0,65 beträgt.

10. Verfahren nach einem der Ansprüche 1 bis 9, **dadurch gekennzeichnet, daß** die in die Glasschmelzzone mit Ausnahme der Rauchabzugszone eingeleitete Sauerstoffmenge etwa 40 Vol.-% der in den Ofen eingeleiteten Sauerstoffgesamtmenge entspricht.

11. Verfahren nach einem der Ansprüche 1 bis 10, **dadurch gekennzeichnet, daß** die in die Glasläuterungszone eingeleitete Sauerstoffmenge etwa 50 Vol.-% der in den Ofen eingeleiteten Sauerstoffgesamtmenge entspricht.

12. Verfahren nach einem der Ansprüche 1 bis 11, **dadurch gekennzeichnet, daß** die in die Rauchabzugszone eingeleitete Sauerstoffmenge etwa 10 Vol.-% der in den Ofen eingeleiteten Sauerstoffgesamtmenge entspricht.

**13.** Verfahren nach einem der Ansprüche 1 bis 12, **dadurch gekennzeichnet, daß** man dem Ofen mit ungeschmolzenem Glas einen Brennstoff, im allgemeinen in gasförmigem Zustand, zuführt und die in den Ofen eingeleitete Oxidationsgasmenge so einstellt, daß im wesentlichen stöchiometrische Verhältnisse eingehalten werden.

**FIG.1**

FIG.2

25

28  28  28

23

22

Zone
évacuation
fumées

37

21

20

4

Zone
fusion

38

10

49

1

39

Zone
affinage

40

3

2